# EUROPEAN PATENT APPLICATION

(11) **EP 1 698 453 A1**
(43) Date of publication of application: **06.09.2006**
(21) Application number: 06004207.4
(22) Date of filing: 02.03.2006
(51) Int. Cl.: B32B 17/10, G06K 19/077, H01Q 1/12, B60J 1/02, G09F 3/20, G08B 13/24

(54) **Panel**

(30) Priority: 04.03.2005 JP 2005061549
(71) Applicant: Nippon Sheet Glass Company, Limited, Tokyo 105-8552 (JP)
(72) Inventor: Ohara, Shohei, Minato-ku Tokyo 105-8552 (JP); Kokuryo, Kazuto, Shiga 520-2144 (JP); Matsushita, Yoshimitsu, Minato-ku Tokyo 105-8552 (JP)
(74) Representative: HOFFMANN EITLE

(57) **Abstract**

A glass panel has a first sheet glass and a second sheet glass which are disposed such that main surfaces thereof are made to face each other, an interlayer film which is disposed between the first and second sheet glasses so as to join the first and second sheet glasses together, an electronic tag which is disposed between the first and second sheet glasses and a shielding layer which is disposed so as to be joined to a portion near a peripheral edge of the first sheet glass and which interrupts the transmission of light. The electronic tag is disposed in a section which is a position that is to be covered and concealed by the shielding layer.

## Description

### BACKGROUND OF THE INVENTION

### 1. Field of the Invention

The present invention relates to a panel such as a glass panel having a function to transmit an identification signal.

### 2. Related Art

In recent years, management technologies making use of electronic tags (also referred to as radio frequency identification or RFID tags) have been spreading. Electronic tags are used such that they are affixed to surfaces of products by means of adhesive or pressure sensitive adhesive double coated tapes. It is proposed that electronic tags be attached to a wide range of articles from small items such as parcels to consumer durables such as automobiles and domestic building materials so as to obtain various types of information therefrom via radio communication for use for control the articles.

For example, JP 2004-326573A discloses a motor vehicles control system in which electronic tags in each of which individual vehicle identifying information is written are attached to motor vehicles so as to control them by making such individual vehicle identifying information written in the tags.

As in the system disclosed in JP 2004-326573A, in a case where an electronic tag is attached to a target object to be controlled such as a motor vehicle, it is easy to be handle when affixed to a surface of a body of the vehicle. However, the electronic tag can easily be removed from the surface of the body, and hence, there exists a possibility where the affixed electronic tag may be replaced with another electronic tag by a person who has an evil intention. Alternatively, it is considered that the electronic tag is damaged by an external factor.

In order to make the electronic tag invisible, the electronic tag may be sealed in an interior of the body. However, when sealing the electronic tag in the interior of the body, there is caused a risk where radio waves that are to be received by the electronic tag are shut off by metallic parts which make up the body to thereby prevent the reading of identification information written in the electronic tag.

To avoid these problems, the electronic tag may be affixed to a member inside the vehicle, for example, to an upper surface of the dashboard. When the electronic tag is affixed to the member inside the vehicle, however, since the electronic tag becomes visible through the windshield from the outside of the vehicle and direct from an occupant inside the vehicle, there may be caused a risk where the appearance of the vehicle is damaged from an aesthetic point of view.

### SUMMARY OF THE INVENTION

The invention was made in view of the problems and an object thereof is to provide a panel in which the electronic tag is mounted at a position where the appearance of the panel from the aesthetic point of view and the function of the electronic tag are least damaged. In particular, the panel of the invention is suitable for a window panel of a vehicle such as windshield since the appearance of the vehicle from the aesthetic point of view is least damaged.

According to an aspect of the invention, there is provided a panel including:
a plurality of optically transparent base materials whose main surfaces face each other;
an interlayer film which is disposed between the base materials so as to join the base materials to each other;
an electronic tag which is disposed between the base materials; and
a shielding layer which is disposed so as to be joined to a portion near a peripheral edge of at least either of the plurality of base materials and which interrupts the transmission of light;
wherein the electronic tag is disposed at a position which is to be covered and concealed by the shielding layer.

The base material can be, for example, a sheet glass, a resin base material or a ceramic base material. In addition, the base material may be made up of not only a transparent material but also a translucent material. Additionally, the main surface of the base material means a joining surface of the base material which is joined to a corresponding surface of the other base material when the base materials are joined together to make up a panel.

According to this aspect of the invention, since the electronic tag is disposed at the portion near the peripheral edge of the base material and is, moreover, covered and concealed by the shielding layer, even in case the electronic tag is provided in the panel, the appearance of the panel is made difficult to be damaged from an aesthetic point of view.

The shielding layer may be disposed at a plurality of positions so as to be joined to a portion near a peripheral edge of each of the plurality of base materials, and the electronic tag may be disposed at a position which is to be covered and concealed by each of the plurality of shielding layers. According to this configuration, since the electronic tag is covered and concealed by the plurality of shielding layers, the appearance of the panel is made more difficult to be damaged from the aesthetic point of view.

The plurality of base materials may be a plurality of sheet glasses which each have the shape of a glass which constitutes part of an automotive glass panel, and when the plurality of sheet glasses are joined to a glass frame element which constitutes part of a vehicle body, the electronic tag may be disposed at a position which is to be covered and concealed by the interior material which constitutes part of the glass frame element. According to this configuration, since the electronic tag is covered and concealed by the shielding layer and the interior member, the appearance of the panel is made much more difficult to be damaged from the aesthetic point of view.

The electronic tag may be disposed at a position where a communication radio wave in a predetermined direction is interrupted by a metallic member incorporated in an interior of the glass frame element. According to this configuration, the electronic tag is made difficult to be affected by a communication radio wave which disturbs the function thereof.

The electronic tag may be disposed at a position which is to be covered and concealed by a molding which is attached to the plurality of sheet glasses when the sheet glasses are joined to the glass frame element. According to this configuration, since the electronic tag is covered and concealed by the molding, the appearance of the panel is made difficult to be damaged from the aesthetic point of view. In addition, when a wiring is connected to the electronic tag, the wiring can be made to be handled easily.

The plurality of base materials may be a plurality of sheet glasses which each have the shape of a glass which constitutes part of an automotive glass panel, and when the plurality of sheet glasses are joined to a glass frame element which constitutes part of a vehicle body, the electronic tag may be disposed at a position which is to be swept thereover by a wiper of the vehicle body. According to this configuration, a substance which interrupts a radio wave communication is refrained from adhering to a surface of the sheet glass which covers the electronic tag.

According to another aspect of the invention, there is provided a window panel adapted to be mounted in a vehicle body, including comprising;
a first and second optically transparent base materials whose main surfaces face each other;
an interlayer film which is disposed between the base materials so as to join the base materials to each other;
a molding attached around peripheral edge of the transparent base materials;
a shielding layer which is disposed so as to be joined to a portion near the peripheral edge of the first transparent base material and which interrupts the transmission of light;
an electronic tag which is disposed between the second transparent base material and the inter layer film;
wherein the electronic tag is disposed at a position which is to be covered and concealed by the shielding layer.

Note that what results from combinations of the constituent elements described in the aforesaid aspect of the invention can be included in the scope of the invention which is to be patented through this patent application.

According to the invention, since the electronic tag is disposed between the facing base materials in such a manner as to be difficult to be identified, the appearance of the panel from the aesthetic point of view and the function of the electronic tag are made difficult to be damaged.

### BRIEF DESCRIPTION OF THE DRAWINGS

Fig. 1 is a front view which shows a state in which a glass panel according to a first embodiment of the invention is mounted on a vehicle body.
Fig. 2 is a sectional view taken along the line II-II in Fig. 1.
Figs. 3A to 3C are drawings which shows external appearances of an electronic tag which is used in the glass panel shown in Fig. 2, in which Fig. 3A is a plan view, Fig. 3B is a front view, and Fig. 3C is a side view of the electronic tag.
Fig. 4 is a block diagram which shows a functional configuration of a semiconductor chip which makes up the electronic tag which is used in the glass panel shown in Fig. 2.
Fig. 5 is a sectional view of a vehicle body such that a glass panel according to a second embodiment of the invention is mounted thereon.
Fig. 6 is a sectional view of a vehicle body such that a glass panel according to a third embodiment of the invention is mounted thereon.
Fig. 7 is a sectional view of a vehicle body such that a glass panel according to a fourth embodiment of the invention is mounted thereon.

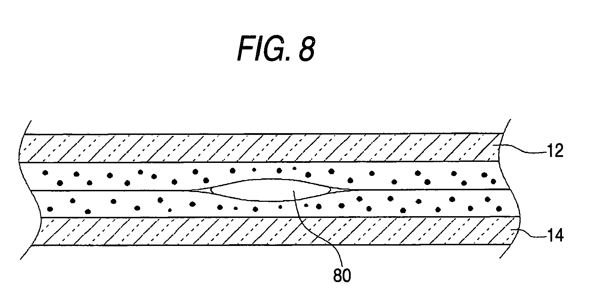

Fig. 8 is a sectional view of a glass panel according to another embodiment of the invention.

### DETAILED DESCRIPTION OF THE PREFERRED EMBODIMENTS

Hereinafter, referring to the drawings, respective embodiments of the invention will be described. Note that in the respective embodiments, like reference numerals are imparted to the same or corresponding constituent elements, so as to omit a duplicate description as appropriately. In addition, in the respective embodiments, the base material will be described as being a sheet glass, and the panel will be described as being used as an automotive windshield.

### (First Embodiment)

In a first embodiment of the invention, a shielding layer is provided at a portion near a peripheral edge of an external sheet glass, and an electronic tag is disposed at a position which is covered and concealed by the shielding layer. Due to this, even in the event that the electronic tag is provided in the glass panel, the appearance of the glass panel is made difficult to be damaged from the aesthetic point of view.

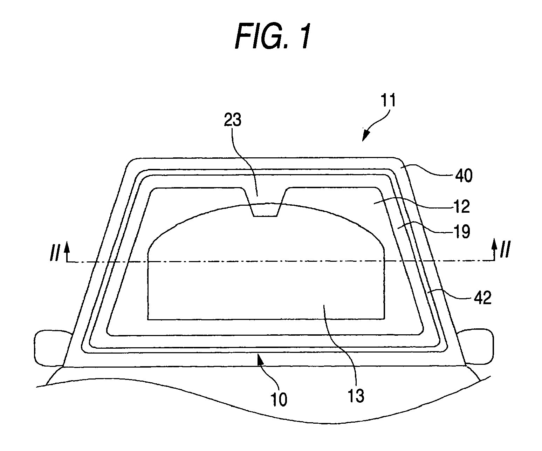

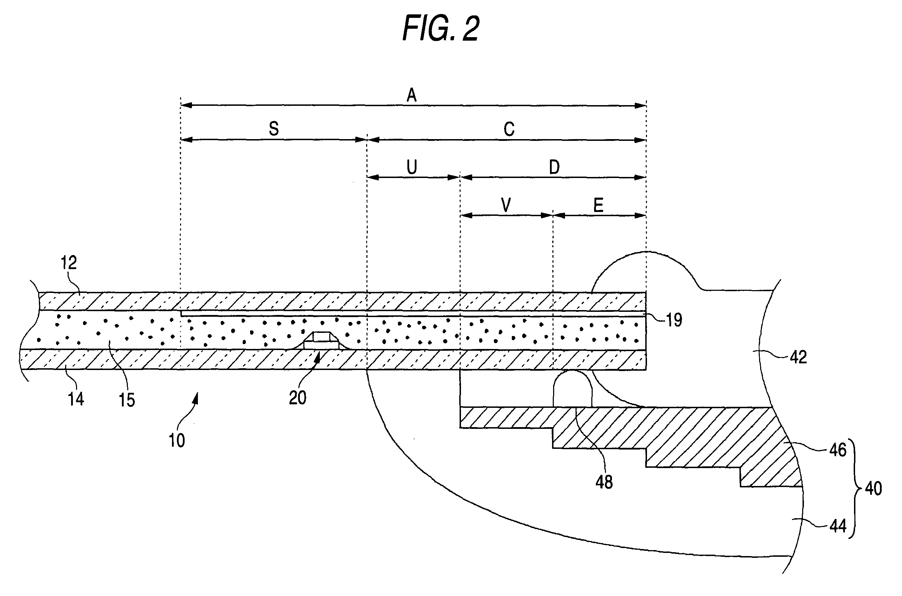

Fig. 1 shows exemplarily a front view of a glass panel 10 according to the first embodiment of the invention such that the glass panel 10 is mounted on a vehicle body 11. Fig. 2 shows part of a section resulting when the glass panel 10 and the body 11, which are shown in Fig. 1, are cut along the line II-II shown in the figure. Note that since these drawings are intended to describe positional relationships of respective constituent members, the drawings do not necessarily represent actual dimensional relationships of the respective constituent members. The glass panel 10 is a so-called laminated glass in which two sheet glasses are heated and contact bonded under pressure for lamination with an interlayer film held therebetween. Since the laminated glass is such that the two sheet glasses are bonded together with high strength via the interlayer film, the laminated glass is made difficult to be spread in glass fragments when broken. Note that the sheet glass means a glass having a main surface so that an electronic tag can be held by two sheet glasses, and for example, an elongate rod-shaped glass having a rectangular cross section is also contained in the sheet glass.

The glass panel 10 includes a first sheet glass 12 which constitutes a sheet glass lying on an external side of the vehicle, a second sheet glass 14 which constitutes a sheet glass lying on an internal side of the vehicle, an interlayer film element 15, a shielding layer 19, and an electronic tag 20. Here, a main surface of the first sheet glass 12 denotes a surface of the first sheet glass 12 which lies on the interlayer film 15 side, that is, a surface of the first sheet glass 12 which lies on the external side of the vehicle. In addition, a main surface of the second sheet glass 14 denotes a surface of the second sheet glass 14 which lies on the interlayer film 15 side, that is, a surface of the second sheet glass 14 which lies on the internal side of the vehicle. Additionally, a surface of the first sheet glass 12 which is opposite to or which lies away from the interlayer film 15 constitutes an external surface of the first sheet glass 12, and a surface of the second sheet glass 14 which is opposite to or which lies away from the interlayer film 15 constitutes an internal surface of the second sheet glass 14.

The glass panel 10 is mounted on the vehicle body 11 when the first and second sheet glasses 12, 14 are joined to a glass frame element 40, which is part of the vehicle body 11. A molding 42 is mounted around a peripheral edge of the glass panel 10 in order to close a gap between the glass panel 10 and the vehicle body 11. In addition, a wiper (not shown) provided on the vehicle body 11 sweeps a sweeping area 13 on the glass panel 10. As shown in Fig. 1, the shielding layer 19 includes a protruding portion 23 which constitutes a portion protruding further centrally than other portions of the shielding layer 19. The protruding portion 23 covers and conceals thereunder parts mounted on an internal surface of the glass panel 10 such as an inside rearview mirror base and a raindrop sensor. Note that the protruding portion 23 and the sweeping area 13 overlap partially.

The interlayer film 15 is made of a tough resin such as polyvinyl butyral or PVB. The thickness of the interlayer film 15 is such as to be available from interlayer films which are distributed as interlayer films for automotive laminated glasses and is, for example, 0.38mm or 0.76mm, and the interlayer film 15 is inserted between the first and second sheet glasses 12, 14 so as to extend to the full extent of the sheet glasses. Functions such as noise insulating function, coloring function and ultraviolet ray cutting function can be imparted to the glass panel 10 by the interlayer film 15. In addition, a plurality of functions can be imparted to the glass panel 10 by superposing a plurality of interlayer films one on the other.

The shielding layer 19 is a thin layer which is disposed so as to be joined to a portion near a peripheral edge of the first sheet glass 12 and which interrupts the transmission of light. The shielding layer 19 is disposed on the main surface of the first sheet glass 12. Note that the shielding layer 19 may be disposed on the external surface of the first sheet glass 12.

The shielding layer 19 is a paint layer or a print layer which is applied mainly to a peripheral edge portion of the glass panel 10. The shielding layer 19 covers and conceals thereunder a portion on which an adhesive is coated to bond the glass panel 10 to the glass frame element of the vehicle body. Due to this, the quality of the glass panel 10 in terms of appearance from the aesthetic point of view can be enhanced by the shielding layer 19. In addition, the shielding layer 19 shields light which irradiates an adhesion member 48 so as to prevent the deterioration of the adhesion member 48 in association with irradiation thereof by light. The shielding layer 19 is formed, for example, by being screen printed on the glass surface with a ceramic paste which contains glass frit having a low fusion point.

Generally, when an electronic tag is attached to a glass panel, it is considered that the electronic tag is affixed to an external surface of the glass via an adhesive or an adhesive coated tape. When the electronic tag is affixed to the glass panel using the method like this, however, the electronic tag can easily be removed from the glass panel, and furthermore, there is caused a risk where the electronic tag is damaged by a human body or an object when the body or the object is brought into contact with the electronic tag. Due to this, the electronic tag 20 is disposed between the first sheet glass 12 and the second sheet glass 14.

The electronic tag 20 is disposed between the interlayer film 15 and the second sheet glass 14. The electronic tag 20 may be disposed between the first sheet glass 12 and the interlayer film 15. In addition, a plurality of interlayer films 15 may be provided so that the electronic tag 20 is held between the interlayer films. There may occur a case where joining surfaces of the electronic tag 20 and the first sheet glass 12 or the second sheet glass 14 cannot be bonded together depending on the shape or material of the electronic tag 20. As this occurs, the electronic tag 20 is preferably disposed between the plurality of interlayer films.

In addition, the electronic tag 20 is disposed at a position which is to be covered and concealed by the shielding layer 19, that is, within a section A shown in Fig. 2. Since the electronic tag 20 is disposed at a portion near a peripheral edge of the glass panel 10 and is, moreover, covered and concealed by the shielding layer 19, even in case the electronic tag 20 is provided in the glass panel 10, the appearance of the glass panel 10 is made difficult to be damaged from the aesthetic point of view.

In Fig. 2, the section A denotes a range where the shielding layer 19 is provided on the first sheet glass 12. In addition, a section C denotes a range where the glass panel 10 and the interior member 44, which is part of the glass frame element, overlap each other. A section D denotes a range where the glass panel 10 and a metallic member 46, which is incorporated in an interior of the glass frame element 40, overlap each other. A section E denotes an outer range which includes the adhesion member 48 which joins the glass panel 10 and the metallic member 46 together. Note that, as shown in Fig. 2, a range which lies in the section A but out of the section C is denoted as a section S, a range which lies in the section C but out of the section D is denoted as a section U, and a range which lies in the section D but out of the section E is denoted as a section V. To be more specific, in this embodiment, the electronic tag 20 is disposed in the section S.

Since the electronic tag 20 is disposed in the section S, the electronic tag 20 is visualized from the inside of the vehicle. To make the electronic tag 20 less noticeable when viewed from the inside of the vehicle, for example, an external color of the location where the electronic tag 20 is disposed may only has to be made to assume a color of the same base as the color of the shielding layer 19 when the location is seen from the inside of the vehicle. To make this happen, configurations can be raised in which the color of the electronic tag 20 itself is made to assume the color of the same base as the color of the shielding layer 19, and in which a coloring layer is provided which covers and conceals the electronic tag 20 from the outside and the color of the coloring layer is made to assume the color of the same base as the color of the shielding layer 19.

In addition, the electronic tag 20 may be disposed at a position within the section S which falls within the range of the sweeping area 13 which is swept by the wiper. By adopting this configuration, a substance such as snow, frost, rain water or dirt which interrupts a radio wave communication can be restrained from adhering to the surface of the first sheet glass 12. In addition, the electronic tag 20 may be disposed in the section C. By adopting this configuration, since the electronic tag 20 is covered and concealed by the shielding layer 19 and the interior member 44, even in case the electronic tag 20 is provided in the glass panel 10, the appearance of the glass panel 10 is made difficult to be damaged from the aesthetic point of view.

Additionally, the electronic tag 20 may be disposed in the section D. By adopting this configuration, the metallic member 46 shields the electronic tag 20 from a communication radio wave transmitted inside the vehicle towards the electronic tag 20. Due to this, for example, in the event that the glass panel 10 having the electronic tag 20 disposed in the section D is applied to a vehicle such as a taxi or truck which has a communication device installed thereon, the electronic tag 20 is made difficult to be affected by radio waves resulting in association with a use of the communication device. In addition, also on vehicles in general, when disposed in the section D, the electronic tag 20 is made difficult to be affected by radio waves transmitted when using a mobile phone inside the vehicle.

In addition, in a system in which the electronic tag 20 radio communicates only with external reading equipment, the electronic tag 20 is preferably disposed in the section D. As the system like this, a system is raised in which passages of a vehicle through an entrance and an exit of a parking lot or a highway are read by reading equipment provided in the vicinity of the entrance and the exit for calculation of a charge or toll for use of the parking lot or the highway. In addition, the glass panel 10 incorporating therein the electronic tag 20 is also preferable for use in a system in which identification information of passing vehicles is read by reading equipment provided at predetermined locations along a road to locate a vehicle involved in a crime or to detect a traffic jam along the road.

Additionally, the electronic tag 20 may be disposed at a position which is to be covered and concealed by the molding 42. By adopting this configuration, even in case the shielding layer 19 is gradated, since the electronic tag 20 is covered and concealed by the molding 42, the appearance of the glass panel 10 is made difficult to be damaged from the aesthetic point of view. In addition, when the electronic tag 20 is connected to an internal wiring, in the event that the electronic tag 20 is disposed at the position which is covered and concealed by the molding 42, not only can a wiring inside the glass panel 10 be made short, but also the electronic tag 20 can be connected to a power supply or extra antenna such that the wiring passes through the molding to thereby be made difficult to be disconnected.

Furthermore, with the electronic tag 20 disposed at the position which is covered by the molding, a radio communication is easy to be disturbed. Due to this, in the event that the electronic tag 20 which records thereon information the user does not want to be read is provided in the glass panel 10, the electronic tag 20 may be provided at the position which is covered by the molding.

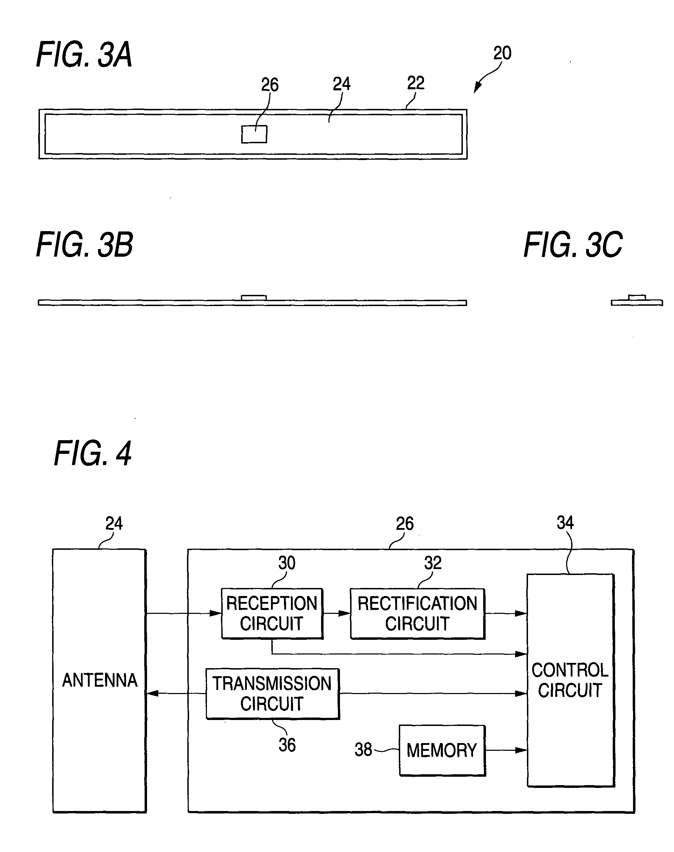

Figs. 3A to 3C show external appearances of the electronic tag 20, wherein Fig. 3A is a plan view, Fig. 3B is a front view and Fig. 3C is a side view of the electronic tag 20. The electronic tag 20 includes an insulation film 22 which is formed into a strip-like shape, an antenna 24 formed on a side of the insulation film for transmitting and receiving radio waves such as microwaves and a semiconductor chip 26 which is a radio chip which is connected to the antenna 24 and which transmits predetermined data as a reply to a request made from the outside through radio communication via the antenna 24.

The electronic tag 20 is configured such that data are stored in a memory circuit within the semiconductor chip 26, so that the data so stored can be read out in a non-contact fashion by radio waves such as microwaves or UHF waves. Due to this, in general, the electronic tag 20 can store a large volume of data compared to bar codes or two-dimensional bar codes since data can be stored in the semiconductor chip 26. In addition, since the electronic tag 20 is different from bar codes or two-dimensional bar bodes in that it is not a printed matter, it is difficult to alter the data stored therein.

The antenna 24 is formed by coating on the resin insulation film 22 a conductive material such as a conductive paste made of mainly copper or silver. The antenna 24 is designed so as to transmit and receive a radio wave of a specific frequency such as a microwave of 2.45GHz with good efficiency. While one example of the shape of the antenna is a loop, the antenna 24 may be formed into other shapes.

The semiconductor chip 26 is fabricated by, for example, forming a circuit as illustrated in a functional block diagram shown in Fig. 4, which will be described later on, on a single crystal silicone substrate. Since the electronic tag 20 is configured such that the thin antenna 24 is formed on the side of the insulation film 22, the tag becomes thin and flexible.

The semiconductor chip 26 is a so-called passive semiconductor chip which is driven using an electromotive force generated by radio waves received from the outside. Since the passive radio chip like this can be made smaller in size than an active one having a power supply incorporated therein by such an extent that the former has no power supply incorporated therein, even in the event that the passive radio chip is provided on an article such as the glass panel 10 in which the external appearance is important, the appearance of the glass panel 10 is not damaged badly from the aesthetic point of view.

The antenna 24 and the semiconductor chip 26 may be sealed in a resin or the like. In addition, a side of the insulation film 22 where the antenna 21 is formed may be covered with a protective resin film to prevent a damage or disconnection of the conductive material due to an external impact.

Fig. 4 is a block diagram which illustrates the functional configuration of the semiconductor chip 26. The semiconductor chip 26 includes a reception circuit 30, a rectification circuit 32, a control circuit 34, a transmission circuit 36 and a nonvolatile memory 38. The reception circuit 30 outputs a radio wave received by the antenna 24 to the rectification circuit 32 and generates a clock signal from the radio wave received by the antenna 24 for output to the control circuit 34. The rectification circuit 32 rectifies the radio wave transmitted from the reception circuit 30 and converts the radio wave so rectified into electric power which constitutes a drive source for the control circuit 34, outputting the electric power so converted to the control circuit 34.

When the clock signal is inputted thereinto from the reception circuit 30, the control circuit 34 fetches predetermined data from the memory 38 and outputs a information signal corresponding to the data so fetched together with a transmission signal to the transmission circuit 36. The transmission circuit 36 modulates the transmission signal inputted from the control circuit 34 with the information signal and transmits the signal so modulated to the outside via the antenna 24. The signal so transmitted is received by read equipment (not shown) placed at an external side.

At least a specific identification number is written in the memory 38, and in addition to the number, various types of data can be stored in the memory 38. The identification number can be used to control the glass panel 10 in which the electronic tag 20 is provided through radio transmission of the number. As examples of data that are stored in the memory 38, there are raised production-related attributes such as production number, production period, production site, production process and distribution history of the glass panel 10, as well as production-related attributes such as constituents or function of the glass. However, the data to be stored in the memory 38 are not limited thereto.

In the semiconductor chip 26, various kinds of frequencies which are used in general can be used, and radio waves can be used whose frequencies include, for example, 135kHz, 13.56MHz, 433MHz, 869MHz, 915MHz or 2.45GHz. These radio waves has their own characteristics. Consequently, the electronic tag 20 is preferably used to match the characteristics of radio waves that are provided by the respective frequencies. For example, since a radio wave of 869MHz enables a long distance communication, the radio wave is convenient when used such that the electronic tag 20 is distant from the read equipment. In addition, since the electronic tag 20 can be made smaller in size when designed to use a radio wave of 2.45GHz, the radio wave of that frequency is convenient when attempting to make the electronic tag 20 provided on the glass surface less noticeable.

While, in this embodiment, the semiconductor chip 26 is a read-only chip, a semiconductor chip such as an EEPROM which can both read and write. In the event of a semiconductor chip which can both read and write, in case it is designed that data can be added to the memory at each stage of a flow of distribution, the control of distribution history can be facilitated further.

The glass panel 10 will be fabricated as below. Firstly, the first sheet glass 12, the interlayer film 15, the electronic tag 20 and the second sheet glass 14 are made to overlay in that order. Next, the first and second sheet glasses 12, 14 are heated while compressed in such a manner that the interlayer film 15 and the electronic tag 20 are held therebetween and are then depressurized so as to remove a void defined between the facing first and second sheet glasses 12, 14, so that the first sheet glass 12 and the interlayer film 15, and the second sheet glass 14 and the interlayer film 15 are joined to each other, respectively, whereby the glass panel 10, which is a single laminated glass as shown in Fig. 1, is molded.

A gap that is produced on a joining surface between the electronic tag 20 and the interlayer film 15 is preferably reduced as small as possible. This is because in the event that there exists a gap, the electronic tag 20 is easily dislocated when the glass panel deforms 10. In addition, a total thickness of the interlayer film 15 and the electronic tag 20 at the portion where the electronic tag 20 is held is preferably equal to the thicknesses of the interlayer film 15 at the other portions. Consequently, a thickness or a material for the interlayer film 15 is preferably selected in consideration of the thickness of the electronic tag 20 and an amount of deformation of the interlayer film when the electronic tag 20 is held.

### (Second Embodiment)

In a second embodiment of the invention, a shielding layer is provided at a portion near to a peripheral edge of an internal sheet glass, and an electronic tag is disposed at a position which is covered and concealed by the shielding layer. Due to this, even in case the electronic tag is provided in a glass panel, the appearance of the glass panel is made difficult to be damaged from an aesthetic point of view.

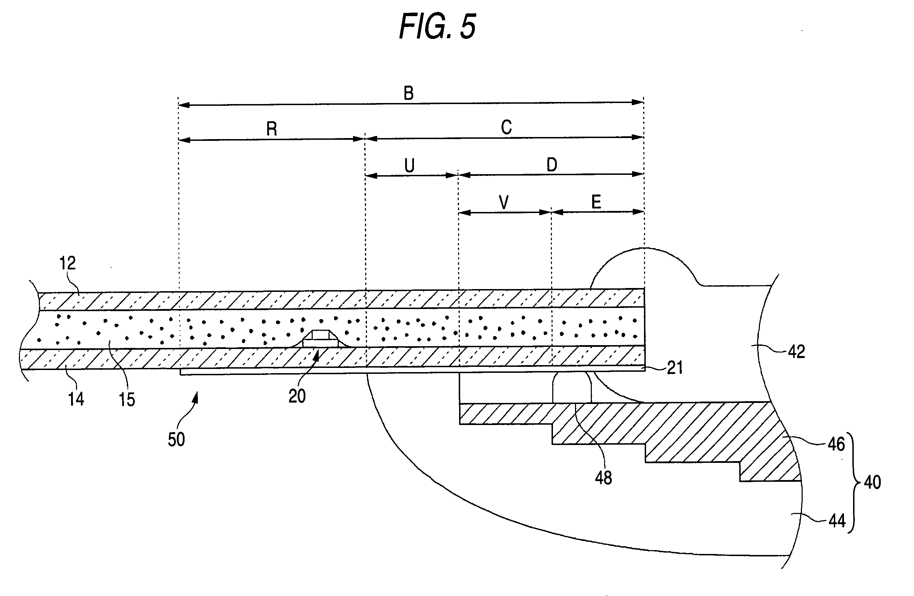

Fig. 5 shows part of a cross section of a vehicle body 11 such that a glass panel 50 according to the second embodiment of the invention is mounted thereon. The glass panel 50 according to this embodiment differs from the glass panel 10 according to the first embodiment in that a shielding layer 21, which replaces the shielding layer 19, is disposed so as to be joined to a portion near a peripheral edge of a second sheet glass 14. The glass panel 50 is common to the glass panel 10 of the first embodiment except for the aforementioned difference.

In this embodiment, an electronic tag 20 is disposed at a position which is to be covered and concealed by the shielding layer 21, that is, in a section B shown in Fig. 5. Note that the section B denotes a range where the shielding layer 21 is provided on the second sheet glass 14. In addition, a range which lies in the section B but out of a section C is denoted as a section R. To be more specific, in this embodiment, the electronic tag 20 is disposed in the section R.

In the event that the electronic tag 20 is disposed at a portion which is covered by a molding 42, the electronic tag 20 becomes almost invisible both from the inside and outside of the vehicle. Due to this, the appearance of the glass panel 50 is made difficult to be damaged from the aesthetic point of view. In addition, in the event that the electronic tag 20 is disposed in the section B excluding the portion which is covered by the molding 42, the electronic tag 20 becomes almost invisible from the inside of the vehicle. Since the electronic tag 20 remains visible from the outside of the vehicle, however, there may be provided a treatment in which the electronic tag 20 is made less noticeable when seen from the outside of the vehicle.

In addition, in the event that the electronic tag 20 is disposed within a range of a sweeping area 13 that is swept by a wiper in the section R, a substance which disturbs a radio wave communication is restrained from adhering to a surface of a first sheet glass 12. Additionally, in the event that the electronic tag 20 is disposed in a section D, the electronic tag 20 is made difficult to be affected by a radio wave transmitted inside of the vehicle. In addition, the electronic tag 20 so disposed is preferable also when conducting radio wave communications only with external reading equipment.

### (Third Embodiment)

In a third embodiment, a shielding layer is provided at a portion near a peripheral edge of each of external and internal sheet glasses, and an electronic tag is disposed at a position which is to be covered and concealed by these shielding layers. Due to this, even in case the electronic tag is provided in a glass panel, the appearance of the glass panel is made difficult to be damaged from an aesthetic point of view.

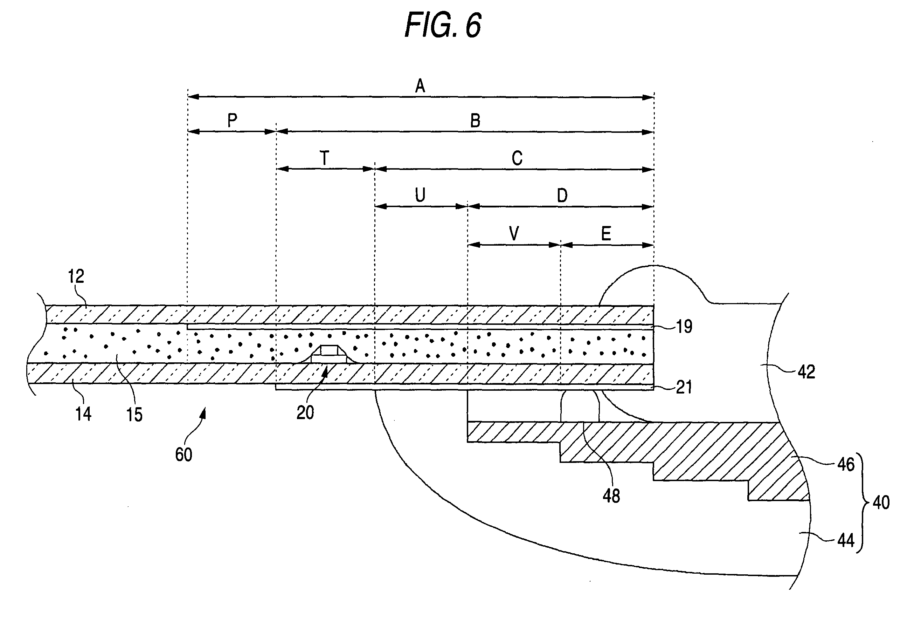

Fig. 6 shows part of a cross section of a vehicle body 11 such that a glass panel 60 according to the third embodiment of the invention is mounted thereon. The glass panel 60 according to the embodiment differs from the glass panel 10 of the first embodiment in that another shielding layer 21 is disposed so as to be joined to a portion near a peripheral edge of a second sheet glass 14. The glass panel 60 is common to the glass panel 10 of the first embodiment except for the aforementioned difference. Note that a shielding layer 19 is disposed further centrally of the glass panel 60 than the shielding layer 21 so as to extend over a wide area in that direction. The shielding layer 21 is disposed on an internal surface of the second sheet glass 14. The glass panel 60 is bonded to a glass frame element 40 by means of an adhesion member 48 at the portion where the shielding layer 21 is disposed.

In Fig. 6, a range which lies in a section A but out of a section B is defined as a section P, and a range which lies in the section B but out of a section C is denoted as a section T. In this embodiment, the electronic tag 20 is disposed in the section A, or, to be more specific, in the section T. Since the electronic tag 20 is disposed in the section T, the electronic tag 20 is covered and concealed by the shielding layers 19, 21. In addition, a radio wave communication with the electronic tag 20 is facilitated both from the inside and outside of the vehicle. Thus, in the event that the glass panel 60 is used for an application where communications with both the inside and outside of the vehicle are necessary, the electronic tag 20 is optimally disposed in the section T when considering the appearance of the glass panel 60 from the aesthetic point of view and the function of the electronic tag 20.

In addition, in the event that the electronic tag 20 is disposed in the section P, the electronic tag 20 becomes almost invisible from the outside of the vehicle. Since the electronic tag 20 remains visible from the inside of the vehicle, however, there may be provided a treatment in which the electronic tag 20 is made less noticeable when seen from the inside of the vehicle. Additionally, in the event that the electronic tag 20 is disposed in a range of a sweeping area 13 that is swept by a wiper in either section P or the section T, a substance which disturbs a radio wave communication is restrained from adhering to a surface of a first sheet glass 12. In particular, in the event that the electronic tag 20 is disposed at a position where the protruding portion 23 shown in Fig. 1 and the sweeping area 13 overlap, the adhesion of such a substance to the surface of the first sheet glass 12 can be restrained effectively.

### (Fourth Embodiment)

In a fourth embodiment of the invention, a shielding layer is provided at a portion near a peripheral edge of each of external and internal sheet glasses, and an electronic tag is disposed at a position which is to be covered and concealed by these shielding layers. Due to this, even in case the electronic tag is provided in a glass panel, the appearance of the glass panel is made difficult to be damaged from an aesthetic point of view.

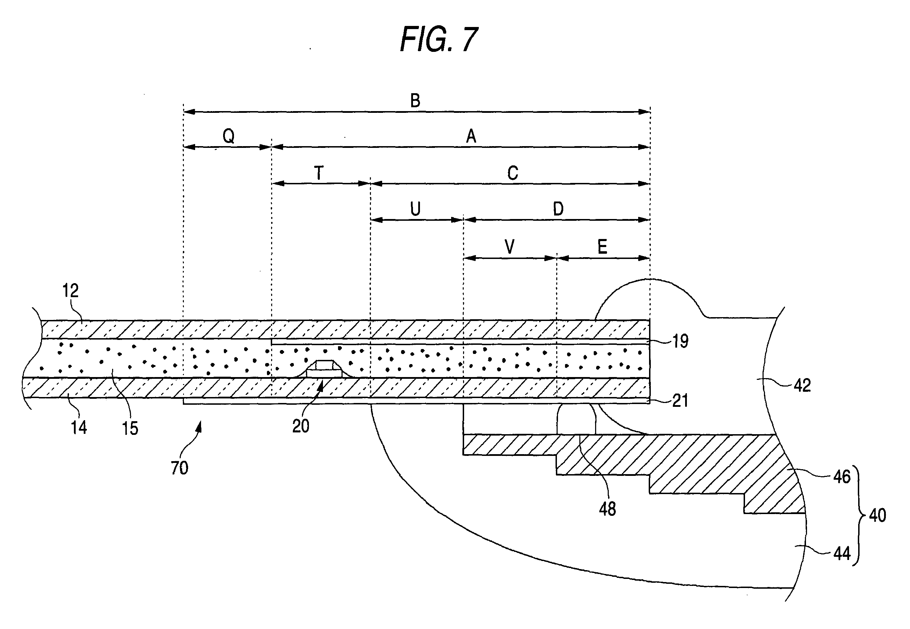

Fig. 7 shows part of a cross section of a vehicle body 11 such that a glass panel 70 according to the fourth embodiment of the invention is mounted thereon. The glass panel 70 according to the embodiment differs from the glass panel 60 of the third embodiment in that a shielding layer 21 is disposed further centrally of the glass panel 70 than a shielding layer 19 so as to extend over a wide area in that direction. The glass panel 70 is common to the glass panel 60 of the third embodiment except for the aforementioned difference. In Fig. 7, a range which lies in a section B but out of a section A is defined as a section Q. In this embodiment, the electronic tag 20 is disposed in the section B, or, to be more specific, in a section T.

Since the electronic tag 20 is disposed in the section T, the electronic tag 20 is covered and concealed by the shielding layers 19, 21. In addition, a radio wave communication with the electronic tag 20 is facilitated both from the inside and outside of the vehicle. Thus, in this embodiment, too, in the event that the glass panel 70 is used for an application where communications with both the inside and outside of the vehicle are necessary, the electronic tag 20 is optimally disposed in the section T when considering the appearance of the glass panel 70 from the aesthetic point of view and the function of the electronic tag 20.

In addition, in the event that the electronic tag 20 is disposed in the section Q, the electronic tag 20 becomes almost invisible from the inside of the vehicle. In this event, there may be provided a treatment in which the electronic tag 20 is made less noticeable when seen from the outside of the vehicle. Additionally, in the event that the electronic tag 20 is disposed in a range of a sweeping area 13 that is swept by a wiper in either section Q or the section T, a substance which disturbs a radio wave communication is restrained from adhering to a surface of a first sheet glass 12.

The glass panels 10, 50 , 60, 70 of the respective embodiments of the invention can be applied to an automotive windshield, backlight or side glass. When they are applied to an automotive windshield, the same glass can be selected quickly for replacement in the event that the windshield is broken by recording in the electronic tag 20 data such as production number, production period and production site of the windshield, or constituents and function of the glass.

In addition, in the event that data such as the registration number or owner of the vehicle is recorded in the electronic tag 20, when the vehicle is stolen, the vehicle can easily be identified as the stolen one when it is located. In this event, since the electronic tag 20 is disposed in the portion which makes difficult the removal thereof, disguising the vehicle by replacing the electronic tag 20 will be difficult. Furthermore, disguising the vehicle by replacing the whole windshield will also be difficult since lots of labor hours are necessary for replacement of the windshield.

Thus, while the invention has been described heretofore based on the respective embodiments thereof, the invention is such as not to be limited thereto and hence can be modified variously in design or the like based on knowledge of those skilled in the art, and embodiments resulting from those modifications can also be included in the scope of the invention.

For example, the base material may be a resin base material made of polycarbonate or the like or a ceramic base material made of quartz or the like, in addition to the sheet glass. Furthermore, the panel may be a combination of a sheet glass and a resin base material, a combination of a sheet glass and a ceramic base material or a combination of a resin base material and a ceramic base material. Note that when the base material is made of polycarbonate, ethylene vinyl acetate copolymer or EVA is generally used as the interlayer film.

Additionally, the base material may be made up of a translucent material like a frosted glass, in addition to the transparent one. Note that in place of the base material having the light transmission properties, an opaque member which does not transmit light may be adopted as the base material.

In addition, as a modified example to the third and fourth embodiments, a configuration is raised in which a shielding layer 19 is disposed on an external surface of a first sheet glass 12, while a shielding layer 21 is disposed on an internal surface of a second sheet glass 14, in which a shielding layer 19 is disposed on a main surface of a first sheet glass 12, while a shielding layer 21 is disposed on a main surface of a second sheet glass 14, or in which a shielding layer 19 is disposed on an external surface of a first sheet glass 12, while a shielding layer 21 is disposed on a main surface of a second sheet glass 14.

In addition, in the respective embodiments, the electronic tag 20 is described as having the construction in which the semiconductor chip is placed on the insulation film. In the electronic tag 20 configured in such a way, as shown in Fig. 2, 5, 6 or 7, a gap still remains on the periphery of the electronic tag 20 even after the sheet glasses and the interlayer film have been joined together. The existence of the gap produces a state in which the electronic tag 20 is easily dislocated and leads to a possibility where the electronic tag 20 is nearly brought into point contact with the sheet glasses at end portions thereof when the glass panel deforms. In case the possibility comes true, a local stress is exerted on the sheet glasses.

Then, as shown in Fig. 0, the electronic tag 20 is encapsulated in a resin so as to mold an electronic tag sealing element 80 having a convex lens-like external shape, and the electronic tag sealing element 80 so molded may be held between two interlayer films. By adopting this configuration, since a gap defined between the electronic tag sealing element 80 and the two interlayer films can be reduced, the electronic tag sealing element 80 comes to be easily held at a fixed position.

In addition, the electronic tag sealing element may be formed into other shapes, provided that the shapes are such that a sectional area resulting when the electronic tag sealing element held by facing sheet glasses is cut perpendicularly relative to the glass surface gradually reduces from a central portion towards both ends thereof. Additionally, the size and thickness of the electronic tag 20 can be selected appropriately depending on an interval at which the facing sheet glasses are disposed. As an example, when an interval between the sheet glasses is relatively wide, an electronic tag 20 can be used which is configured so as to be sealed in a cylindrical capsule or the like.

In addition, in place of the passive electronic tag used in the embodiments of the invention, an active electronic tag may be used in which a solar panel is affixed to a surface of a sheet glass and a semiconductor chip is connected to a power supply such as the solar panel so affixed.

## Claims

1. A panel comprising:
a plurality of optically transparent base materials whose main surfaces face each other;
an interlayer film which is disposed between the base materials so as to join the base materials to each other;
an electronic tag which is disposed between the base materials; and
a shielding layer which is disposed so as to be joined to a portion near a peripheral edge of at least either of the plurality of base materials and which interrupts the transmission of light;
wherein the electronic tag is disposed at a position which is to be covered and concealed by the shielding layer.

2. A panel according to Claim 1, wherein a plurality of the shielding layers are disposed at plural locations so as to be joined to a portion near a peripheral edge of each of the base, materials, and the electronic tag is disposed at a position which is to be covered and concealed by each of the plurality of shielding layers.

3. A panel according to Claims 1 or 2, wherein the base materials include a plurality of sheet glasses each of which has a shape of constituting a part of an automotive glass panel, and when the sheet glasses are joined to a glass frame element which constitutes a part of a vehicle body, the electronic tag is disposed at a position which is to be covered and concealed by an interior material which constitutes a part of the glass frame element.

4. A panel according to any of Claims 1 to 3, wherein the electronic tag is disposed at a position where a communication radio wave in a predetermined direction is interrupted by a metallic member incorporated in an interior of the glass frame element.

5. A panel according to any of Claims 1 to 3, wherein the electronic tag is disposed at a position which is to be covered and concealed by a molding which is attached to the sheet glasses when the sheet glasses are joined to the glass frame element.

6. A panel according to Claim 1, wherein the base materials are a plurality of sheet glasses each of which has a shape constituting a part of an automotive glass panel, and when the sheet glasses are joined to a glass frame element which constitutes a part of a vehicle body, the electronic tag is disposed at a position which is to be swept thereover by a wiper of the vehicle body.

7. A window panel adapted to be mounted in a vehicle body, comprising:
a first and second optically transparent base materials whose main surfaces face each other;
an interlayer film which is disposed between the base materials so as to join the base materials to each other;
a molding attached around peripheral edge of the transparent base materials;
a shielding layer which is disposed so as to be joined to a portion near the peripheral edge of the first transparent base material and which interrupts the transmission of light;
an electronic tag which is disposed between the second transparent base material and the inter layer film;
wherein the electronic tag is disposed at a position which is to be covered and concealed by the shielding layer.

8. A window panel according to claim 7, wherein the electronic tag is disposed at a position which is to be swept thereover by a wiper of the vehicle body.

9. A window panel according to Claim 7 or 8, wherein the electronic tag is mounted on the second transparent base material, and the second transparent base material is located on an internal side of the vehicle body with respect to the first transparent base material having the shielding layer.

10. A window panel according to any of claims 7 to 9, wherein the interlayer film includes PVB resin.

11. A window panel according to any of claims 7 to 10, wherein the interlayer film is provided with at least one of noise insulating function, coloring function and ultraviolet ray cutting function.
